# EUROPÄISCHE PATENTSCHRIFT

(11) **EP 2 051 352 B1**
(45) Veröffentlichungstag und Bekanntmachung des Hinweises auf die Patenterteilung: **24.02.2010**
(21) Anmeldenummer: 07016879.4
(22) Anmeldetag: 29.08.2007
(51) Int. Cl.: H02K 5/22, H02K 41/03

(54) **Elektrische Linearantriebsvorrichtung**
Electric linear drive device
Dispositif d'entraînement linéaire électrique

(43) Veröffentlichungstag der Anmeldung: 22.04.2009
(73) Patentinhaber: FESTO AG & Co. KG, 73734 Esslingen (DE)
(72) Erfinder: Finkbeiner, Matthias, 71159 Mötzingen (DE); Gückel, Jürgen, 70794 Filderstadt (DE)
(74) Vertreter: Abel, Martin

(56) Entgegenhaltungen:
- EP-A- 0 985 831
- EP-A- 1 047 881
- EP-A- 1 273 807
- WO-A-91/14871
- WO-A-93/01646
- WO-A-2004/075382
- DE-A1- 10 244 261
- DE-A1- 10 306 461

## Beschreibung

Die Erfindung betrifft eine elektrische Linearantriebsvorrichtung, mit einem ein Gehäuserohr aufweisenden Außengehäuse, in das das Antriebsteil einer als elektrodynamischer Lineardirektantrieb ausgebildeten Antriebseinheit nach Art einer Patrone derart axial eingesetzt ist, dass eine Abtriebsstange der Antriebseinheit an der Vorderseite des Außengehäuses herausragt, wobei das Antriebsteil ein an der Innenumfangsfläche des Rohrinnenraumes des Gehäuserohrs anliegendes äußeres Antriebsgehäuse aufweist, das eine ortsfeste Antriebsspulenanordnung und einen mit der Abtriebsstange verbundenen und mit einer Antriebsmagnetanordnung ausgestatteten, axial beweglichen Läufer aufnimmt, mit einer Positionserfassungseinrichtung zur Erfassung mindestens einer Axialposition der aus Läufer und Abtriebsstange bestehenden Bewegungseinheit, und mit einer mit sowohl der Antriebsspulenanordnung als auch der Positionserfassungseinrichtung verbundenen zentralen elektrischen Schnittstelleneinrichtung für die externe elektrische Kommunikation.

Eine aus der EP 1047881 B1 bekannte elektrische Linearantriebsvorrichtung dieser Art enthält ein Außengehäuse mit einem Gehäuserohr, in das das Antriebsteil einer als elektrodynamischer Lineardirektantrieb ausgebildeten Antriebseinheit von der Rückseite her eingesteckt ist. Die Antriebseinheit ist für sich gesehen funktionsfähig, wobei das Außengehäuse unter anderem die mechanischen Schnittstellen zur externen Befestigung liefert. Im Innern des als Antriebsgehäuse bezeichneten Gehäuses des Lineardirektantriebes befinden sich eine getaktet mit einer Erregerspannung beaufschlagbare Antriebsspulenanordnung sowie eine diesbezüglich linear verschiebbare permanentmagnetische Antriebsmagnetanordnung, die an einem Läufer angeordnet ist, von dem eine Antriebsstange wegragt, die den externen Abgriff der Bewegungsenergie ermöglicht. Zur Erfassung mindestens einer Axialposition der aus Läufer und Antriebsstange bestehenden Bewegungseinheit ist der Lineardirektantrieb mit einer Positionserfassungseinrichtung ausgestattet. Eine rückseitig am Antriebsgehäuse angeordnete zentrale elektrische Schnittstelleneinrichtung ermöglicht die Einspeisung der für die Erzeugung der Linearbewegung erforderlichen Betätigungsenergie sowie die Ausgabe der von der Positionserfassungseinrichtung erzeugten Detektionssignale. Diese rückseitige Anordnung der zentralen elektrischen Schnittstelleneinrichtung beeinträchtigt oftmals die Installation der Linearantriebsvorrichtung am Einsatzort. Auch sitzt das Antriebsteil stirnseitig mehr oder weniger ungeschützt im Außengehäuse und kann daher leicht verschmutzen oder sonstigen mechanischen Beeinträchtigungen ausgesetzt sein.

Aus der DE 10244261 B4 geht ein elektrodynamischer Lineardirektantrieb hervor, der sich prinzipiell für die Verwendung bei der oben genannten Linearantriebsvorrichtung eignet. Eine Unterbringung in einem zusätzlichen Außengehäuse ist allerdings nicht explizit vorgesehen.

Die EP 0985831 A2 beschreibt in Verbindung mit einem fluidischen Linearantrieb die Anbringung einer zur Ausgabe von Detektionssignalen dienenden elektrischen Schnittstelleneinrichtung an einer Seitenwand des Gehäuserohres. Im Innern der Wandung des Gehäuserohres des Linearantriebes ist ein Rohrkanal ausgebildet, der eine Leiterplatte aufnimmt, die zum einen mit der elektrischen Schnittstelleneinrichtung verbunden ist und die zum anderen mit im gleichen Rohrkanal untergebrachten Positionssensoren verbunden ist. Der fluidische Linearantrieb ist hier wie der Lineardirektantrieb der DE 10244261 B4 ein eigenständiger Antrieb, der nicht nochmals in einem zusätzlichen Außengehäuse untergebracht ist.

Aus der WO 2004/075382 A ist ein Linearantrieb bekannt, dessen Gehäuse aus einem zylindrischen Rohr und stirnseitig angeordneten Deckeln besteht. In dem Rohr sitzt eine Spulenanordnung, in der eine mit einer Betätigungsstange verbundene Magnetanordnung bewegbar aufgenommen ist. Zur Erfassung der Position der Magnetanordnung ist im Inneren des Gehäuses ein Signalwandler angeordnet.

Es ist eine Aufgabe der vorliegenden Erfindung, bei einer elektrischen Linearantriebsvorrichtung der eingangs genannten Art Maßnahmen zu treffen, die bei gutem Schutz vor mechanischen Beeinträchtigungen und bei optimierten elektrischen Kommunikationsmaßnahmen eine Installation am Einsatzort begünstigen.

Zur Lösung dieser Aufgabe weist das Außengehäuse der Linearantriebsvorrichtung, stirnseitig an dem Gehäuserohr angeordnet, einen von der Abtriebsstange durchsetzten vorderen Gehäusedeckel sowie einen hinteren Gehäusedeckel auf, die gemeinsam mit dem Gehäuserohr einen das Antriebsteil komplett aufnehmenden Aufnahmeraum begrenzen, wobei die zentrale elektrische Schnittstelleneinrichtung seitlich am Gehäuserohr axial zwischen den beiden Gehäusedeckeln angeordnet ist und über mindestens ein elektrisches Betätigungskabel mit der Antriebsspulenanordnung und über mindestens ein bezüglich diesem Betätigungskabel gesondertes elektrisches Signalkabel mit der Positionserfassungseinrichtung verbunden ist, wobei diese elektrischen Kabel nach außen hin verdeckt in mindestens einem in der Wandung des Gehäuserohrs ausgebildeten, sich in der Längsrichtung des Gehäuserohrs erstreckenden und umfangsseitig geschlossenen Kabelkanal verlaufen.

Die nach außen hin abgeschirmte Unterbringung des Antriebsteils in dem Aufnahmeraum des Außengehäuses sorgt für einen zuverlässigen Schutz vor mechanischen Beeinträchtigungen. In gleicher Weise geschützt sind die elektrischen Kabel, die in mindestens einem in der Wandung des Gehäuserohrs ausgebildeten Kabelkanal zu der zentralen elektrischen Schnittstelleneinrichtung hin verlaufen. Da Selbige seitlich am Gehäuserohr angeordnet ist, bleiben die Stirnseiten des Außengehäuses für Montagemaßnahmen frei, wobei insbesondere die Möglichkeit besteht, die elektrische Schnittstelleneinrichtung so zu platzieren, dass sie über keine der beiden Stirnseiten des Außengehäuses vorsteht. Bereits bei der Herstellung des Gehäuserohrs kann nach Anwenderwunsch die Montagestelle für die Installation der zentralen elektrischen Schnittstelleneinrichtung vorbereitet werden, insbesondere in Gestalt eines die Gehäusewandung zu dem mindestens einen Kabelkanal hin durchsetzenden Durchgangsloches. Ausgehend von der zentralen elektrischen Schnittstelleneinrichtung führen gesonderte elektrische Kabel zum Antriebsspulensystem und zur Positionserfassungseinrichtung, was eine dahingehende Verlegung erlaubt, dass die Störfelder des recht hohen Spulenstroms die Sensorsignale nicht beeinträchtigen. Man erreicht somit auch ohne aufwendige Abschirmung der elektrischen Kabel eine sichere Betriebsweise mit hoher Präzision. Schließlich ist durch das sich aus dem Gehäuserohr und den beiden Gehäusedeckeln zusammensetzende Außengehäuse die Möglichkeit geschaffen, mechanische Befestigungsschnittstellen bereitzustellen, die denjenigen bei fluidbetätigten Linearantrieben entsprechen. Man kann insbesondere auch die bei fluidischen Linearantrieben vorhandenen Normschnittstellen verwirklichen. Dies eröffnet insgesamt die Möglichkeit, die elektrische Linearantriebsvorrichtung ohne Umrüstung des Umfeldes anstelle von fluidbetätigten Linearantrieben zu installieren. Eine Anlage oder Maschine kann folglich sehr einfach von einer fluidischen Antriebstechnik auf eine elektrische Antriebstechnik umgerüstet werden.

Vorteilhafte Weiterbildungen der Erfindung gehen aus den Unteransprüchen hervor.

Ist die Abtriebsstange im vorderen Gehäusedeckel bei gleichzeitiger Querabstützung linear verschiebbar geführt, kann ihr aus dem Außengehäuse herausragender Längenabschnitt hohe Querkräfte aufnehmen, ohne die Komponenten des Antriebsteils mechanisch zu überlasten.

Die Linearantriebsvorrichtung lässt sich besonders einfach zusammenbauen, wenn das in das Gehäuserohr eingesteckte Antriebsteil durch die beiden stirnseitig angebrachten Gehäusedeckel axial unbeweglich fixiert wird. Es erübrigen sich dann zusätzliche Befestigungsmaßnahmen. Allerdings ist auch eine radiale Klemmung des Antriebsteils am Außenumfang möglich. Das Antriebsteil kann in beiden Fällen im Rahmen eines einfachen linearen Steckvorganges in das Gehäuserohr eingeschoben werden.

Es ist von Vorteil, wenn die elektrischen Kabel durch einen oder beide Gehäusedeckel hindurch in das Außengehäuse hineingeführt sind. Dadurch erübrigen sich entsprechende Querkanäle in der Wandung des Gehäuserohrs. Man kann das Gehäuserohr kundenspezifisch auf beliebige Längen zuschneiden, ohne jeweils noch Nacharbeiten für nach innen geführte Kanäle vornehmen zu müssen.

Zweckmäßigerweise mündet der Kabelkanal an mindestens einer Stirnseite des Gehäuserohrs aus und geht dort in eine Aussparung des sich anschließenden Gehäusedeckels über, sodass das zugeordnete elektrische Kabel aus dem Kabelkanal in die sich anschließende Aussparung eintreten kann.

Besonders vorteilhaft ist eine Anordnung, bei der das mindestens eine Betätigungskabel und das mindestens eine Signalkabel von entgegengesetzten Stirnseiten des Gehäuserohrs her zu der zentralen elektrischen Schnittstelleneinrichtung geführt sind. Dadurch vermeidet man eine axiale Überlappung dieser Kabel und verhindert besonders wirksam eine gegenseitige Beeinträchtigung durch entstehende elektrische Störfelder.

In diesem Zusammenhang kann mindestens ein Kabelkanal vorhanden sein, der das Gehäuserohr über seine gesamte Länge hinweg durchzieht und zu beiden Stirnseiten ausmündet, wobei dann das mindestens eine Betätigungskabel in dem einen und das mindestens eine Signalkabel in dem anderen der beiden Kanalabschnitte verläuft, die sich diesseits und jenseits an die Montagestelle der zentralen elektrischen Schnittstelleneinrichtung anschließen.

Das Antriebsteil ist zweckmäßigerweise so ausgebildet, dass sein Betätigungskabel rückseitig abgeht und durch den sich anschließenden hinteren Gehäusedeckel hindurch in den zur zentralen elektrischen Schnittstelle führenden Kabelkanal des Gehäuserohrs eintritt. Gleichzeitig kann mindestens ein an die Positionserfassungseinrichtung angeschlossenes Signalkabel ausgehend vom vorderen Gehäusedeckel in dem sich anschließenden Kabelkanal zu der zentralen elektrischen Schnittstelleneinrichtung geführt sein. Dieses Signalkabel ist insbesondere an ein Wegmesssystem der Positionserfassungseinrichtung angeschlossen, das sich im Innern der Linearantriebsvorrichtung befindet. Ein berührungslos mit der Abtriebsstange kooperierendes Sensorteil des Wegmesssystems ist zweckmäßigerweise im vorderen Gehäusedeckel angeordnet und über mindestens ein Signalkabel an die zentrale elektrische Schnittstelleneinrichtung angeschlossen. Es handelt sich insbesondere um ein inkrementelles Wegmesssystem.

In Verbindung mit einem inkrementellen Wegmesssystem ist es von Vorteil, wenn die Positionserfassungseinrichtung zur Bestimmung des Nullpunktes über einen Referenzsensor verfügt. Dieser Referenzsensor sitzt zweckmäßigerweise am hinteren Gehäusedeckel und wird von einem permanentmagnetischen Betätigungsmagneten aktiviert, der rückseitig am Läufer angeordnet ist. Bei der Linearbewegung des Läufers bewegt sich der Betätigungsmagnet mithin durch das den Läufer koaxial umschließende Antriebsspulensystem hindurch, wobei überraschend festgestellt wurde, dass hierdurch keinerlei Funktionsbeeinträchtigungen auftreten.

Das von dem Referenzsensor ausgehende Signalkabel verläuft in geschützter Weise ebenfalls im Innern des Außengehäuses zu der zentralen elektrischen Schnittstelleneinrichtung. Hierbei durchsetzt es den hinteren Gehäusedeckel und einen in der Wandung des Gehäuserohrs ausgebildeten Kabelkanal, wobei es, weil der Referenzsensor nur für die Nullpunktbestimmung des Wegmesssystems genutzt wird, ohne weiteres ein Stück weit neben dem mindestens einen Betätigungskabel gemeinsam mit diesem in ein und demselben Kabelkanal des Gehäuserohrs verlaufen kann.

Der Referenzsensor ist zweckmäßigerweise in einer Befestigungsnut am Außenumfang des hinteren Gehäusedeckels fixiert, wobei sein Signalkabel in einem zu der Befestigungsnut ausmündenden Kabeldurchführungskanal des hinteren Gehäusedeckels verläuft.

Damit auch bei der elektrischen Verbindung mit externen Einrichtungen keine gegenseitige Beeinträchtigung durch Störfelder auftritt, ist die zentrale elektrische Schnittstelleneinrichtung zweckmäßigerweise mit zwei gesonderten Kabelabgangseinrichtungen ausgestattet, von denen gesonderte elektrische Anschlusskabel abgehen können, von denen das eine dem mindestens einen Betätigungskabel und das andere dem mindestens einen Signalkabel zugeordnet ist.

Da der elektrodynamische Lineardirektantrieb während seines Betriebes zu einer starken Wärmeentwicklung neigt, ist es von Vorteil, wenn am Außenumfang des Gehäuserohres sich axial erstreckende Kühlrippen ausgebildet sind.

Schließlich ist es auch von Vorteil, wenn an mindestens einem und zweckmäßigerweise an beiden Gehäusedeckeln mechanische Befestigungsschnittstellen vorhanden sind, die eine externe Befestigung der Linearantriebsvorrichtung und/oder den Anbau von Zusatzteilen ermöglichen.

Nachfolgend wird die Erfindung anhand der beiliegenden Zeichnung näher erläutert. In dieser zeigen:

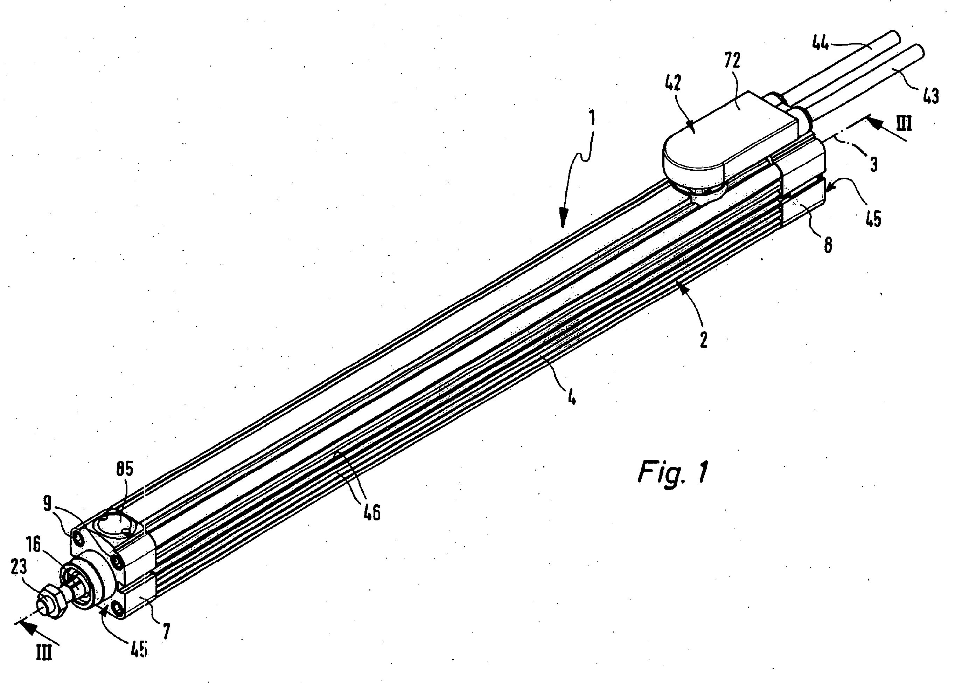

- Figur 1: eine perspektivische Darstellung eines bevorzugten Ausführungsbeispiels der elektrischen Linearan- triebsvorrichtung,

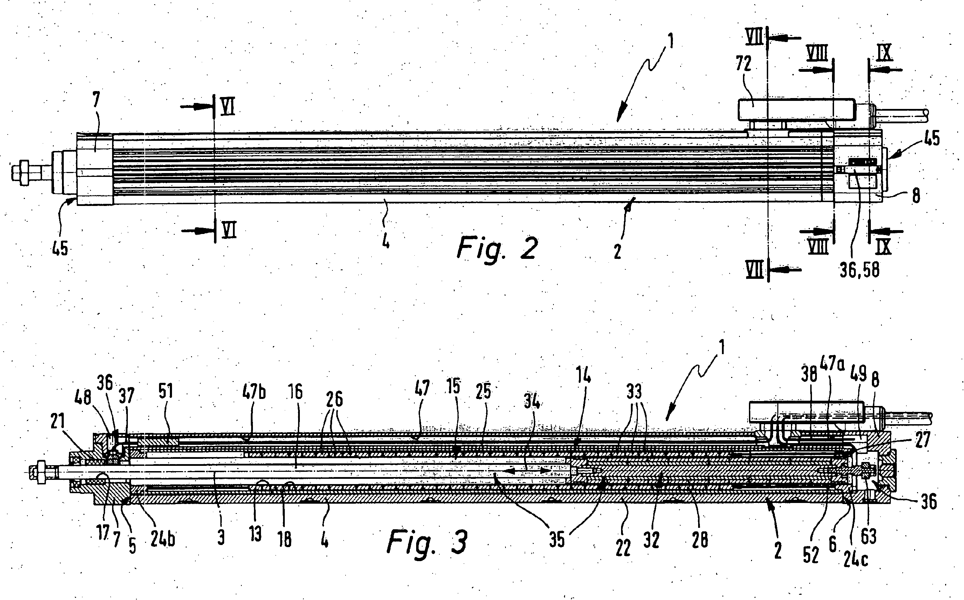

- Figur 2: die Linearantriebsvorrichtung aus Figur 1 in einer Seitenansicht,
- Figur 3: die Linearantriebsvorrichtung aus Figur 1 im Längs- schnitt gemäß Schnittlinie III-III,

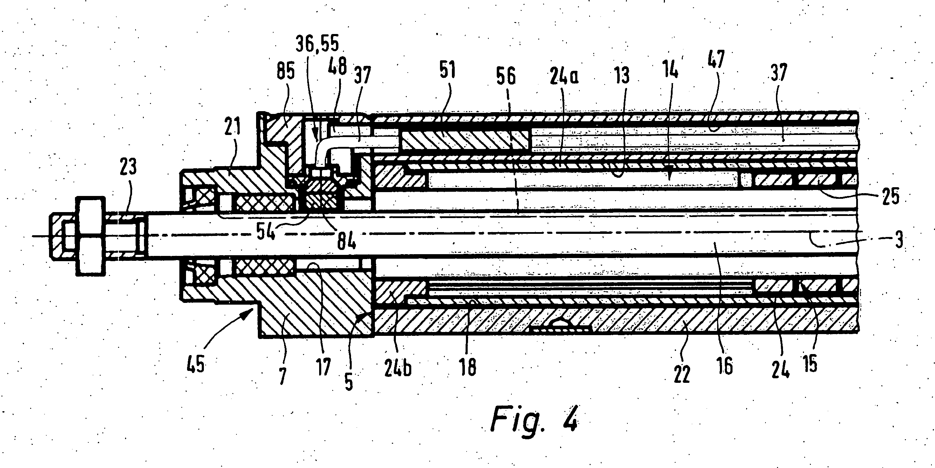

- Figur 4: im Längsschnitt den vorderen Endbereich der Linear- antriebsvorrichtung,

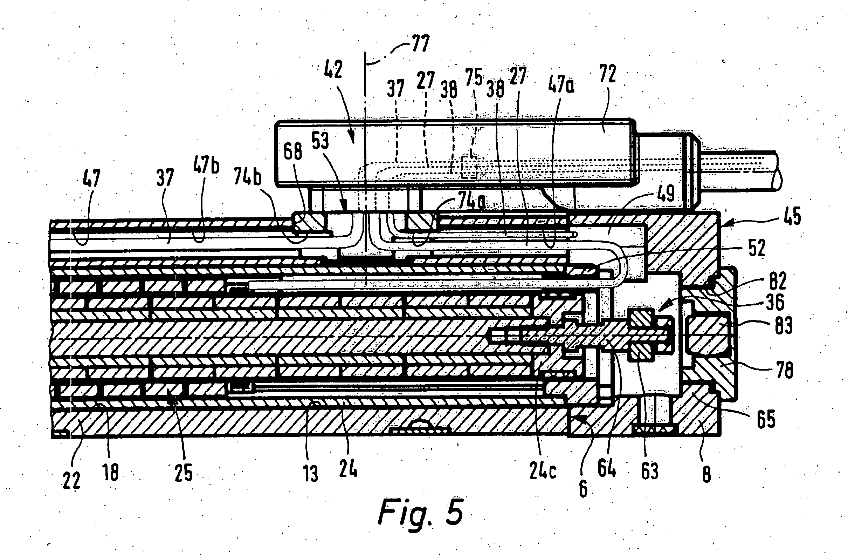

- Figur 5: im Längsschnitt den hinteren Endabschnitt der Line- arantriebsvorrichtung,
- Figur 6: einen Querschnitt durch die Linearantriebsvorrich- tung gemäß Schnittlinie VI-VI aus Figur 2,
- Figur 7: einen Querschnitt durch die Linearantriebsvorrich- tung gemäß Schnittlinie VII-VII aus Figur 2, wobei die zentrale elektrische Schnittstelleneinrichtung nur partiell geschnitten ist,

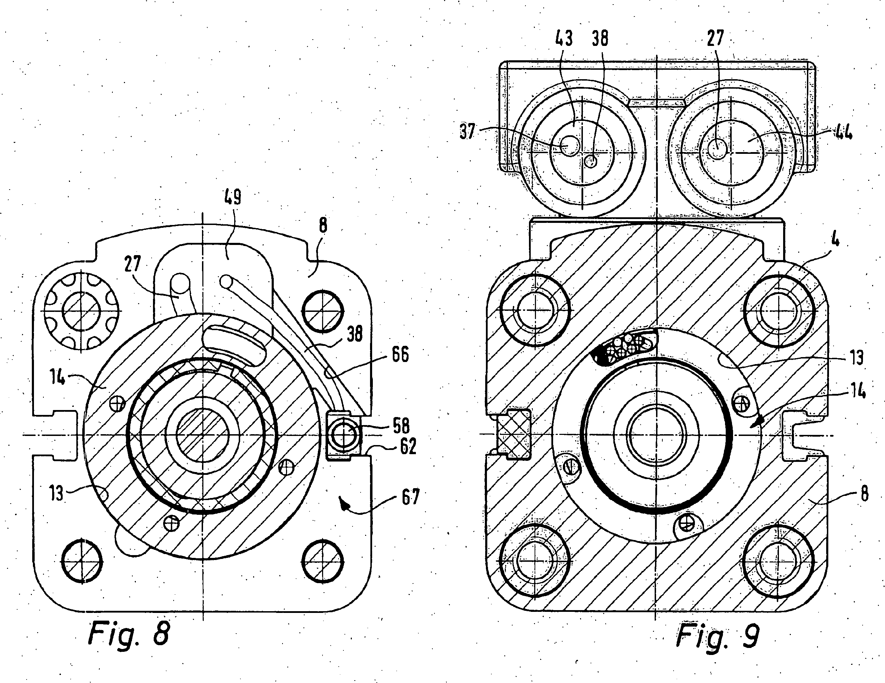

- Figur 8: einen Querschnitt durch die Linearantriebsvorrich- tung gemäß Schnittlinie VIII-VIII im Fügebereich zwischen dem Gehäuserohr und dem hinteren Gehäuse- deckel und ohne Abbildung der zentralen elektri- schen Schnittstelleneinrichtung und
- Figur 9: einen Querschnitt durch den Linearantrieb gemäß Schnittlinie IX-IX aus Figur 2, wobei die zentrale elektrische Schnittstelleneinrichtung ungeschnitten gezeigt ist.

Die in ihrer Gesamtheit mit Bezugsziffer 1 bezeichnete elektrische Linearantriebsvorrichtung verfügt über ein Längserstreckung aufweisendes Außengehäuse 2 mit einer Längsachse 3. Das Außengehäuse 2 setzt sich aus einem länglichen Gehäuserohr 4, einem an die vordere Stirnfläche 5 des Gehäuserohres 4 angesetzten vorderen Gehäusedeckel 7 und einem an die hintere Stirnfläche 6 des Gehäuserohres 4 angesetzten hinteren Gehäusedeckel 8 zusammen. Die Gehäusedeckel 7, 8 sind durch axiale Befestigungsschrauben 9 mit dem Gehäuserohr 4 in lösbarer Weise axial verspannt.

Gemeinsam begrenzen das Gehäuserohr 4 und die beiden Gehäusedeckel 7, 8 einen sich in Richtung der Längsachse 3 erstreckenden, bevorzugt im Wesentlichen zylindrisch konturierten Aufnahmeraum 13. In diesem sitzt nach Art einer Patrone das Antriebsteil 14 einer von einem elektrodynamischen Linearantrieb gebildeten elektrischen Antriebseinheit 15. Eine an der vorderen Stirnseite aus dem Antriebsteil 14 herausragende Abtriebsstange 16 der Antriebseinheit 15 durchsetzt dabei eine koaxiale Deckeldurchbrechung 17 des vorderen Gehäusedeckels 7.

Beim Zusammenbau der Linearantriebsvorrichtung 1 kann die Antriebseinheit 15 vor dem Anbringen des hinteren Gehäusedeckels 8 mit der Abtriebsstange 16 voraus von der Rückseite her in den dann frei zugänglichen Rohrinnenraum 18 des Gehäuserohrs 4 axial eingesteckt werden. Im komplett eingesteckten Zustand ist das Antriebsteil 14 durch die beiden Gehäusedeckel 7, 8 in dem Aufnahmeraum 13 axial unbeweglich abgestützt. Innerhalb des Gehäuserohres 4 ist das Antriebsteil 14 durch die den Rohrinnenraum 18 umschließende Wandung 22 des Gehäuserohres 4 radial abgestützt und zentriert. Am einfachsten erreicht man dies durch eine komplementäre Konturierung des Außenumfanges des Antriebsteils 14 und des Innenumfanges des Aufnahmeraumes 13. Jedenfalls sind diese Konturen derart aufeinander abgestimmt, dass das Antriebsteil 14 allein durch den Einsteckvorgang ohne weitere Befestigungsmaßnahmen im Innern des Aufnahmeraumes 13 radial fixiert ist.

Das Antriebsteil 14 ist vom Außengehäuse 2 komplett umschlossen. Von der Antriebseinheit 15 ragt lediglich die Abtriebsstange 16 aus dem Außengehäuse 2 heraus, deren äußerer Endabschnitt als Befestigungsabschnitt 23 ausgeführt ist, an dem sich eine zu bewegende Last befestigen lässt.

Das Antriebsteil 14 verfügt über ein äußeres Antriebsgehäuse 24 mit einem rohrförmigen Wandabschnitt 24a, der an der Innenumfangsfläche des Rohrinnenraumes 18 anliegt. Er bildet ein magnetisches Rückschlussteil für eine insgesamt hülsenförmig ausgebildete Antriebsspulenanordnung 25, die ortsfest in das Antriebsgehäuse 24 eingesetzt ist und sich aus einer Vielzahl axial aufeinanderfolgender Einzelspulen 26 zusammensetzt. Die Antriebsspulenanordnung 25 kann sich über die gesamte axiale Länge oder - wie abgebildet - über nur eine Teillänge des rohrförmigen Wandabschnittes 24a erstrecken.

Von der Antriebsspulenanordnung 25 geht ein als Betätigungskabel 27 bezeichnetes elektrisches Kabel ab, über das elektrische Betätigungsenergie in Gestalt einer getakteten Erregerspannung einleitbar ist. Dadurch bildet sich ein wanderndes Magnetfeld aus, das mit einer permanentmagnetischen Antriebsmagnetanordnung 28 kooperiert, die Bestandteil eines innerhalb des Antriebsgehäuses 24 in Achsrichtung der Längsachse 3 linear bewegbaren Läufers 32 ist. Bevorzugt umfasst die Antriebsmagnetanordnung 28 eine Mehrzahl koaxial zueinander angeordneter ringförmiger Einzelmagnete 33, die jeweils aus einem Stück bestehen oder segmentiert sind. Allerdings sind auch andere Formgebungen möglich, beispielsweise scheibenförmig. Bei Magnetringen befindet sich Innen in der Regel ein Eisenkern, bei Magnetscheiben kann zwischen benachbarten Magnetscheiben jeweils eine Eisenscheibe als Polschuh eingebaut sein. Wichtig ist, dass sich ein möglichst starkes radial verlaufendes Magnetfeld ausbildet, da nur die radial verlaufenden Feldanteile zur Krafterzeugung beitragen.

Die erwähnte Abtriebsstange 16 ist mit ihrem inneren Endabschnitt an dem Läufer 32 befestigt, sodass sie zusammen mit diesem eine Bewegungseinheit 35 bildet, die durch die Interaktion zwischen der Antriebsspulenanordnung 25 und der Antriebsmagnetanordnung 28 zu einer durch einen Doppelpfeil angedeuteten linearen Arbeitsbewegung 34 in Achsrichtung der Längsachse 3 antreibbar ist.

Zweckmäßigerweise ist die Abtriebsstange 16 bei ihrer Linearbewegung innerhalb des vorderen Gehäusedeckels 7 unter gleichzeitiger Querabstützung linear verschiebbar geführt. Dies geschieht hier mittels einer in den vorderen Gehäusedeckel 7 eingesetzten, die Abtriebsstange 16 umschließenden Führungsbuchse 21. Dadurch werden von einer Last in den Befestigungsabschnitt 23 eingeleitete Querkräfte vom Läufer 32 ferngehalten, was den Verschleiß zwischen dem Läufer 32 und der ortsfesten Komponente des Antriebsteils 14 reduziert.

Bei der Arbeitsbewegung 34 bleibt der Läufer 32 mit seiner Antriebsspulenanordnung 25 stets komplett innerhalb des Antriebsgehäuses 24. Zur Definition der beiden Hubendlagen können stirnseitig an dem rohrförmigen Wandabschnitt 24a ein vorderes und ein hinteres Abschlusselement 24b, 24c angeordnet sein. Beim Ausführungsbeispiel hat das hintere Abschlusselement 24c allerdings, wie später noch erläutert wird, keine Hubbegrenzungsfunktion.

Eine insgesamt mit Bezugsziffer 36 bezeichnete Positionserfassungseinrichtung 36 der Linearantriebsvorrichtung 1 ermöglicht die Erfassung mindestens einer Axialposition der aus Läufer 32 und Abtriebsstange 16 zusammengesetzten Bewegungseinheit 35. Die von der Positionserfassungseinrichtung 36 erzeugten Detektionssignale werden unter Vermittlung elektrischer Kabel ausgegeben, wobei es sich exemplarisch um ein erstes elektrisches Signalkabel 37 und um ein zweites elektrisches Signalkabel 38 handelt.

Das von der Antriebsspulenanordnung 25 ausgehende Betätigungskabel 27 sowie die beiden von der Positionserfassungseinrichtung 36 ausgehenden elektrischen Signalkabel 37 sind eigenständige, voneinander getrennte elektrische Kabel und unabhängig voneinander zu einer außen am Außengehäuse 2 angeordneten zentralen elektrischen Schnittstelleneinrichtung 42 geführt. Die Bezeichnung "zentral" ist gewählt, um zu zeigen, dass dort alle elektrischen Kabel 27, 37, 38 zusammenlaufen, sodass zur Verbindung mit externen elektrischen Peripheriegeräten dienende elektrische Anschlusskabel 43, 44 in einem lokal begrenzten Bereich der Linearantriebsvorrichtung 1 angeschlossen werden können.

Es sei darauf hingewiesen, dass die Anzahl der in der Linearantriebsvorrichtung 1 verlaufenden elektrischen Kabel von der beim Ausführungsbeispiel vorhandenen abweichen kann. Es können zudem jeweils sowohl einadrige als auch mehradrige Kabel verwendet werden.

Die zentrale elektrische Schnittstelleneinrichtung 42 ist in dem axial zwischen den beiden Gehäusedeckeln 7, 8 liegenden Bereich seitlich außen am Gehäuserohr 4 angeordnet. Dadurch bleiben die axial nach außen orientierten äußeren Stirnflächen der beiden Gehäusedeckel 7, 8 für Befestigungsmaßnahmen nutzbar und können als Befestigungsschnittstellen 45 ausgebildet werden, durch deren Nutzung die Linearantriebsvorrichtung 1 an einer dafür vorgesehenen externen Haltestruktur festlegbar ist. Man hat insbesondere die Möglichkeit, die äußere Formgebung der Gehäusedeckel 7, 8 entsprechend der äußeren Formgebung der Gehäusedeckel fluidbetätigter Linearantriebe auszubilden, insbesondere mit den dort vorhandenen Normschnittstellen, sodass sich die elektrische Linearantriebsvorrichtung 1 problemlos anstelle von fluidbetätigten Linearantrieben installieren lässt.

Es ist auch vorteilhaft, wenn die elektrische Schnittstelleneinrichtung 42 so angeordnet und ausgebildet ist, dass sie nicht axial über das Außengehäuse 2 hinausragt. Dies ist ein weiterer Faktor, um die stirnseitige Befestigung des Außengehäuses 2 nicht zu beeinträchtigen.

Die Wandung 22 des Gehäuserohres 4 ist an ihrer Außenfläche zweckmäßigerweise mit mehreren sich parallel zur Längsachse 3 erstreckenden Kühlrippen 46 ausgestattet, die einer verbesserten Wärmeabfuhr an die Umgebung dienen. Exemplarisch sind sie paarweise an einander entgegengesetzten Außenflächen des bevorzugt eine rechteckige und insbesondere eine quadratische Außenkontur aufweisenden Gehäuserohres 4 ausgebildet. Es handelt sich zweckmäßigerweise um einstückige Komponenten des bevorzugt als stranggepresstes Bauteil hergestellten Gehäuserohres 4.

Die von der Antriebsspulenanordnung 25 und von der Positionserfassungseinrichtung 36 ausgehenden elektrischen Kabel 27, 37, 38 verlaufen im Innern des Außengehäuses 2 in nach außen hin verdeckter Weise, wobei sie sich in mindestens einem in der Wandung 22 des Gehäuserohres 4 verlaufenden Kabelkanal 47 erstrecken. Der Kabelkanal 47 ist umfangsseitig geschlossen und verläuft parallel zur Längsachse 3. Er kann beim Strangpressen des Gehäuserohres 4 unmittelbar einstückig eingeformt werden.

Auf diese Weise ist es möglich, die Kabel innerhalb der elektrischen Linearantriebsvorrichtung 1 so zu verlegen, dass sie bis hin zur zentralen elektrischen Schnittstelleneinrichtung 42 zur Umgebung hin abgedeckt und vor Beschädigung geschützt sind.

Das Ausführungsbeispiel verfügt über einen sämtlichen elektrischen Kabeln 27, 37, 38 gemeinsam zugeordneten Kabelkanal 47, bei dem es sich zweckmäßigerweise um den einzigen als Kabelkanal genutzten Längskanal des Gehäuserohres 4 handelt.

Der Kabelkanal 47 mündet an den beiden Stirnflächen 5, 6 aus und geht in je eine Aussparung 48, 49 des sich anschließenden Gehäusedeckels 7, 8 über.

Das Betätigungskabel 27 geht von dem dem hinteren Gehäusedeckel 8 zugewandten rückseitigen Endbereich 52 des Antriebsteils 14 ab, durchsetzt anschließend die Aussparung 49 des hinteren Gehäusedeckels 8 und tritt an der hinteren Stirnfläche 6 in den Kabelkanal 47 ein. Von dort aus erstreckt es sich in dem sich anschließenden hinteren Kanalabschnitt 47a des Kabelkanals 47, und zwar bis hin zu der Montagestelle 53 des Gehäuserohres 4, an der die elektrische Schnittstelleneinrichtung 42 angebaut ist.

Das erste elektrische Signalkabel 37 verläuft getrennt von dem Betätigungskabel 27 zu der Montagestelle 53, und zwar von der entgegengesetzten Axialseite her, also ausgehend vom vorderen Gehäusedeckel 7. Hierbei erstreckt es sich in dem zwischen der Montagestelle 53 und der vorderen Stirnfläche 5 des Gehäuserohres 4 verlaufenden Kanalabschnitt 47b des Kabelkanals 47.

Das erste elektrische Signalkabel 37 geht von einem Sensorteil 54 der Positionserfassungseinrichtung 36 aus, das in den vorderen Gehäusedeckel 7 eingebaut ist. Im Anschluss an das Sensorteil 54 durchsetzt das erste elektrische Signalkabel 37 zunächst die Aussparung 48 des vorderen Gehäusedeckels 7, um ausgehend von dort in den vorderen Kanalabschnitt 47b einzutreten. Sofern es die genutzte Sensortechnologie erfordert oder wünschenswert macht, kann in den Verlauf des ersten elektrischen Signalkabels 37 auch noch eine Elektronikeinheit 51, beispielsweise eine mit einer elektrischen Schaltung bestückte Platine, eingeschaltet sein. Diese kann in dem vorderen Kanalabschnitt 47b untergebracht sein Während also das Betätigungskabel 27 ausgehend von der zentralen elektrischen Schnittstelleneinrichtung 42 zum hinteren Gehäusedeckel 8 verläuft, erstreckt sich das erste elektrische Signalkabel 37 in entgegengesetzter Richtung zum vorderen Gehäusedeckel 7 hin, sodass ein sich überlappender Kabelverlauf vermieden wird. Dadurch wirken sich im Umfeld des Betätigungskabels 27 entstehende elektrische Felder nicht nachteilig auf die über das erste elektrische Signalkabel 37 ausgegebenen Detektionssignale aus, und zwar selbst dann nicht, wenn die elektrischen Kabel keine oder nur geringe elektromagnetische Abschirmungsmaßnahmen aufweisen.

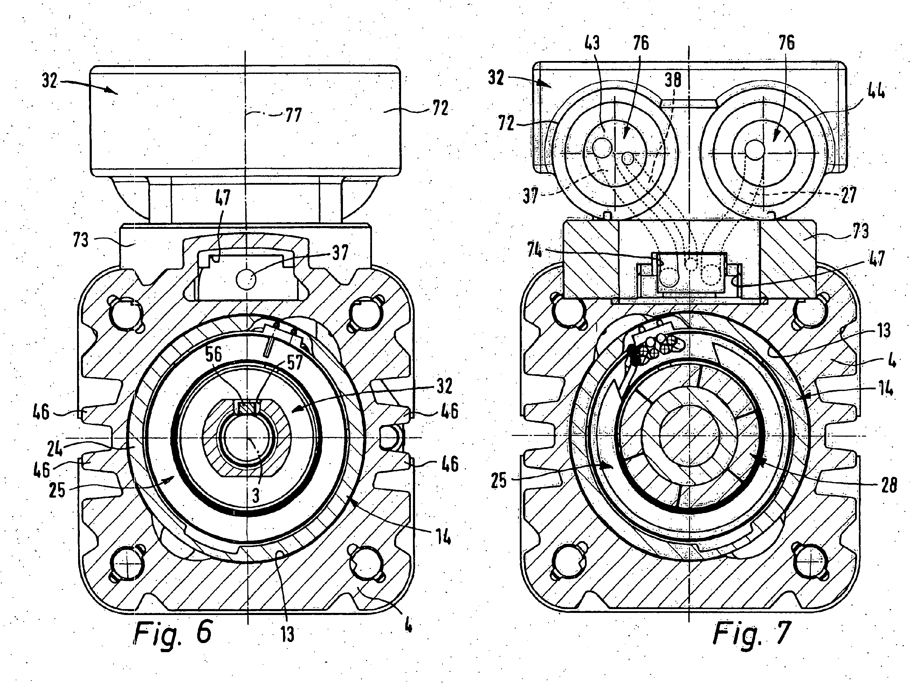

Das Sensorteil 54 ist zweckmäßigerweise Bestandteil eines Wegmesssystems 55 der Positionserfassungseinrichtung 36, mit dem sich die momentane Axialposition der Bewegungseinheit 35 über ihren gesamten Hub hinweg erfassen lässt. Beim Ausführungsbeispiel wird auf ein inkrementelles Wegmesssystem 55 zurückgegriffen, bei dem die Abtriebsstange 16 mit einem sich längs erstreckenden Magnetstreifen 56 versehen ist, der in axialer Abfolge über eine Vielzahl magnetisierter Zonen verfügt und von dem Sensorteil 54 berührungslos abgetastet wird. Da dieses Verfahren als solches bekannt ist, wird auf detailliertere Ausführungen an dieser Stelle verzichtet. Es sei jedoch erwähnt, dass der Magnetstreifen 56 zweckmäßigerweise in einer aus Figur 6 ersichtlichen Längsnut 57 der Abtriebsstange 16 in gekapselter Weise untergebracht ist. Das Wegmesssystem kann insbesondere gemäß dem Inhalt der EP 0695879 B1 ausgebildet sein.

Das erste elektrische Signalkabel 37 liefert also Detektionssignale des Wegmesssystems 55, wobei es wegen der kontinuierlichen Messung besonders vorteilhaft ist, dass das Betätigungskabel 27 mit Ausnahme im Bereich der elektrischen Schnittstelleneinrichtung 42 getrennt vom ersten elektrischen Signalkabel 37 verläuft.

Würden die beiden elektrischen Kabel 27, 37 ausgehend vom gleichen Gehäusedeckel zur elektrischen Schnittstelleneinrichtung 42 verlaufen, würde man sie zweckmäßigerweise in separaten Kabelkanälen 47 durch die Wandung 22 hindurchführen, mit ausreichendem Querabstand zur Verhinderung einer gegenseitigen elektromagnetischen Beeinflussung.

Die Positionserfassungseinrichtung 36 enthält insbesondere dann, wenn sie mit einem inkrementellen Wegmesssystem 55 ausgestattet ist, bevorzugt auch noch einen auf nur eine Axialposition der Bewegungseinheit 35 ansprechenden Positionssensor 58. Dieser fungiert als Referenzsensor zum Festlegen des Nullpunktes des inkrementellen Wegmesssystems 55. Von diesem Positionssensor 58 geht das zweite elektrische Signalkabel 38 aus, das auch zu der elektrischen Schnittstelleneinrichtung 42 hin verlegt ist.

Der Positionssensor 58 ist bevorzugt am hinteren Gehäusedeckel 8 angeordnet, wobei er beim Ausführungsbeispiel in einer Befestigungsnut 62 fixiert ist, die sich am Außenumfang des hinteren Gehäusedeckels 8 befindet, und zwar in einem Bereich, der sich mit dem internen Aufnahmeraum 13 axial überlappt.

Zur Aktivierung des Positionssensors 58 ist der Läufer 32 an seiner Rückseite mit einem Betätigungsmagneten 63 versehen, der bei die hintere Hubendlage einnehmendem Läufer 32 derart radial innerhalb des Positionssensors 58 zu liegen kommt, dass er diesen berührungslos betätigt. Der Positionssensor 58 ist hier ein magnetfeldempfindlicher Sensor, beispielsweise ein Hall-Sensor oder ein sogenannter Reed-Schalter.

Bei der Arbeitsbewegung 34 bewegt sich der Betätigungsmagnet 63 innerhalb der den Läufer 32 koaxial umschließenden Antriebsspulenanordnung 25. Wie festgestellt wurde, wirkt sich dies weder auf die Betätigung der Antriebseinheit 15 noch auf die Magnetisierung des Betätigungsmagneten 63 in negativer Weise aus.

Wie sich ebenfalls überraschend herausgestellt hat, wirkt sich das Magnetfeld der Antriebspulenanordnung 25 nicht auf die Funktionsfähigkeit des Magnetstreifens 56 aus, obwohl sich dieser während der Arbeitsbewegung 34 des Läufers 32 in diesem Magnetfeld bewegt.

Vorzugsweise sitzt der Betätigungsmagnet 63 mit axialem Abstand zum Läufer 32 an einem Tragbolzen 64, der am Läufer 32 angeordnet ist und von dessen Rückseite koaxial wegragt.

Wenn sich die Bewegungseinheit 35 in der hinteren Hubendlage befindet, endet der Läufer 32 mit axialem Abstand zur axialen Abschlusswand 65 des hinteren Gehäusedeckels 8. Sein hinterer Endbereich befindet sich hier etwa im Übergangsbereich zwischen dem Gehäuserohr 4 und dem hinteren Gehäusedeckel 8, wobei der hintere Gehäusedeckel 8 im Wesentlichen becherförmig ausgebildet ist. Der den Betätigungsmagneten 63 tragende Tragbolzen 64 ragt dann ausgehend von dem Läufer 32 in den vom hinteren Gehäusedeckel 8 umschlossenen Endabschnitt des Aufnahmeraumes 13 hinein.

Damit auch das zweite elektrische Signalkabel 38 vor mechanischen Einwirkungen geschützt ist, ist es im Innern des Außengehäuses 2 zur elektrischen Schnittstelleneinrichtung 42 hin verlegt. Hierzu ist im hinteren Gehäusedeckel 8 ein zwischen der Befestigungsnut 62 und der Aussparung 49 verlaufender Kabeldurchführungskanal 66 ausgebildet. Das zweite elektrische Signalkabel 38 erstreckt sich daher ausgehend von dem Positionssensor 58 durch den Kabeldurchführungskanal 66 hindurch in die Aussparung 49 und von dort in den hinteren Kanalabschnitt 47a hinein und dort bis hin zu der elektrischen Schnittstelleneinrichtung 42.

Der Kabeldurchführungskanal 66 kann durch ein Nut gebildet sein, die in die dem Gehäuserohr 4 zugewandte Stirnfläche des hinteren Gehäusedeckels 8 eingebracht ist und durch die hintere Stirnfläche 6 des Gehäuserohres 4 abgedeckt wird.

Zwar erstreckt sich das zweite elektrische Signalkabel 38 innerhalb des hinteren Kanalabschnittes 47a ein Stück weit neben dem Betätigungskabel 27 und ist daher dessen elektromagnetischen Feldern ausgesetzt. Dies wirkt sich jedoch nicht nachteilig aus, da das Detektionssignal des Positionssensors 58 nur anfänglich als Referenzsignal zur Initialisierung der Positionserfassungseinrichtung 36 benötigt wird.

Ungeachtet dessen wäre es selbstverständlich auch möglich, die Positionserfassungseinrichtung 36 mit einem oder mehreren Positionssensoren entsprechend dem Positionssensor 58 auszustatten, mit denen sich eine oder mehrere im Betrieb der Antriebseinheit 16 auftretende Axialpositionen der Bewegungseinheit 35 erfassen lassen. Zweckmäßiger ist allerdings eine Realisierung der Positionserfassungseinrichtung 36 mittels eines Wegmesssystems.

Die zentrale elektrische Schnittstelleneinrichtung 42 ist an der schon erwähnten Montagestelle 53 von außen her an das Gehäuserohr 4 angesetzt. Im Bereich der Montagestelle 53 verfügt die Wandung 22 des Gehäuserohres 4 über eine Wanddurchbrechung 68, durch die die elektrischen Kabel 27, 37, 38 aus dem Kabelkanal 47 herausgeführt sind und in ein Anschlussgehäuse 72 der elektrischen Schnittstelleneinrichtung 42 eintreten. Exemplarisch dient die Wanddurchbrechung 68 auch zur mechanischen Fixierung der elektrischen Schnittstelleneinrichtung 42. Exemplarisch greift hierzu ein hülsenförmiger Fußabschnitt 73 der Schnittstelleneinrichtung 42 in die Wanddurchbrechung 68 hinein und ist am Außengehäuse 2 fixiert. Der innerhalb des Kabelkanals 47 liegende Bestandteil des Fußabschnittes 73 verfügt über sich diametral gegenüberliegende Wanddurchbrechungen 74a, 74b, durch die hindurch die elektrischen Kabel 27, 37, 38 in den Hohlraum des Fußabschnittes 73 eintreten können.

Durch Abdichtung des Fußabschnittes 73 und hier insbesondere der beiden Wanddurchbrechungen 68 gegenüber dem Gehäuserohr 4, zum Beispiel mit einer Masse oder Klebstoff niedriger Viskosität, kann eine elektrische Schutzart für die gesamte Linearantriebsvorrichtung erzielt werden. Die Kabelabgänge an der Positionserfassungseinrichtung 36 und am Antriebsteil 14 sind ohnehin von Hause aus geschützt.

Ausgehend vom Innern des Fußabschnittes 73 erstrecken sich die elektrischen Kabel 27, 37, 38 ins Innere des beim Ausführungsbeispiel kastenförmigen Anschlussgehäuses 72 hinein, wo sie an ortsfeste elektrische Kontaktmittel 75 angeschlossen sind, mit denen auch die abgehenden elektrischen Anschlusskabel 43, 44 in elektrischer Verbindung stehen. Dadurch ist die elektrische Kommunikation mit externen elektronischen Geräten gewährleistet, an die die elektrischen Anschlusskabel 43, 44 angeschlossen sind.

Beispielhaft bilden das Anschlussgehäuse 72 und der Fußabschnitt 73 eine L-förmige Konfiguration. Das Anschlussgehäuse 72 ragt also ausgehend von dem Fußabschnitt 73 radial weg, wobei es sich in einer zur Längsachse 3 parallelen Ebene erstreckt, sodass es nahe an der Außenfläche des Gehäuserohres 4 zu liegen kommt.

Zweckmäßigerweise ist das Anschlussgehäuse 72 derart am Fußabschnitt 73 fixiert, dass es in unterschiedlichen Drehwinkelpositionen angeordnet werden kann. Dadurch lässt sich die Orientierung der beiden bevorzugt parallel zueinander ausgerichteten Kabelabgangseinrichtungen 76 variieren, an denen die an die elektrischen Kontaktmittel 75 angeschlossenen elektrischen Anschlusskabel 43, 44 abgehen. Die Drehachse 77 für die winkelmäßige Positionierung verläuft radial zur Längsachse 3 und fällt mit der Längsachse des bevorzugt hülsenförmigen Fußabschnittes 73 zusammen.

Für das Anschlussgehäuse 72 sind bevorzugt wenigstens vier um jeweils 90° zueinander verdrehte Drehwinkelstellungen möglich. Dies gestattet eine Ausrichtung, bei der die Kabelabgangseinrichtungen 76 entweder nach hinten oder nach vorne oder nach einer der beiden Seiten weisen.

Die Kabelabgangseinrichtungen 76 sind zweckmäßigerweise nach Art von Rohrstutzen ausgebildet und definieren Einführöffnungen für die elektrischen Anschlusskabel 43, 44. Letztere verfügen zweckmäßigerweise über einen Kabelmantel mit elektromagnetischer Abschirmung für darin geführte Adern, die mit den elektrischen Kontaktmitteln 75 verlötet oder lösbar verbunden sind.

Das hintere Abschlusselement 24c kann so ausgeführt sein, dass es keine Anschlagfunktion hinsichtlich des Läufers 32 erfüllt. Dies ermöglicht es, die gesamte Bewegungseinheit 35 zu Wartungszwecken rückseitig aus dem Antriebsgehäuse 24 herauszuziehen, wobei das Antriebsgehäuse 24 mit darin fixierter Antriebsspulenanordnung 25 an Ort und Stelle im Antriebsgehäuse 24 verbleiben kann.

Um die Bewegungseinheit 35 herauszuziehen, wird entweder der hintere Gehäusedeckel 8 vorübergehend abgeschraubt oder man entfernt einen in oder an die rückwärtige axiale Abschlusswand 65 des hinteren Gehäusedeckels 8 eingesetzten bzw. angesetzten Verschlussdeckel 78, um eine die rückwärtige Abschlusswand 65 durchsetzende Zugangsöffnung 82 freizulegen, die den Durchtritt der Bewegungseinheit 35 gestattet.

Wenn das hintere Abschlusselement 24c nicht als Anschlagelement fungiert, kann der hintere Gehäusedeckel 8 diese Funktion übernehmen. So wird beim Ausführungsbeispiel die eingefahrene Hubendlage dadurch definiert, dass der Tragbolzen 64 auf ein an der rückwärtigen Abschlusswand 65 angeordnetes und vorzugsweise von dem Verschlussdeckel 78 getragenes Pufferelement 83 aufläuft.

Die Ausgestaltung der Linearantriebsvorrichtung 1 erlaubt die Realisierung einer hohen Schutzart, also einen hohen Schutz vor eindringender Verschmutzung und Feuchtigkeit. Außerdem ist das Design sehr reinigungsfreundlich.

Die das Sensorteil 54 enthaltende Aufnahmekammer 84 im vorderen Gehäusedeckel 7 ist durch einen von der Seite her an den vorderen Gehäusedeckel 7 angebrachten Verschlussdeckel 85 dicht verschlossen. Der Verschlussdeckel 85 ist lösbar angebracht, sodass das Sensorteil 54 im Defektfall leicht ausgewechselt werden kann. Die Aussparung 48 des vorderen Gehäusedeckels 7 kann zumindest teilweise in dem Verschlussdeckel 85 ausgebildet sein.

Wenn für den Betrieb der Linearantriebsvorrichtung 1 aufgrund weiterer Einbauten weitere elektrische Kabel erforderlich sind, erfolgt zweckmäßigerweise ebenfalls eine im Innern des Außengehäuses 2 verdeckte Verlegung. Soweit eine Verbindung mit der elektrischen Schnittstelleneinrichtung 42 erforderlich ist, verlaufen auch diese weiteren elektrischen Kabel zweckmäßigerweise in einem Kabelkanal in der Wandung 22 des Gehäuserohrs 4.

## Patentansprüche

1. Elektrische Linearantriebsvorrichtung, mit einem ein Gehäuserohr (4) aufweisendem Außengehäuse (2), in das das Antriebsteil (14) einer als elektrodynamischer Lineardirektantrieb ausgebildeten Antriebseinheit (15) nach Art einer Patrone derart axial eingesetzt ist, dass eine Abtriebsstange (16) der Antriebseinheit (15) an der Vorderseite des Außengehäuses (2) herausragt, wobei das Antriebsteil (14) ein an der Innenumfangsfläche des Rohrinnenraumes (18) des Gehäuserohrs (4) anliegendes äußeres Antriebsgehäuse (24) aufweist, das eine ortsfeste Antriebsspulenanordnung (25) und einen mit der Abtriebsstange (16) verbundenen und mit einer Antriebsmagnetanordnung (28) ausgestatteten, axial beweglichen Läufer (32) aufnimmt, mit einer Positionserfassungseinrichtung (36) zur Erfassung mindestens einer Axialposition der aus Läufer (32) und Abtriebsstange (16) bestehenden Bewegungseinheit (35), und mit einer mit sowohl der Antriebsspulenanordnung (25) als auch der Positionserfassungseinrichtung (36) verbundenen zentralen elektrischen Schnittstelleneinrichtung (42) für die externe elektrische Kommunikation, **dadurch gekennzeichnet, dass** das Außengehäuse (2), stirnseitig an dem Gehäuserohr (4) angeordnet, einen von der Abtriebsstange (16) durchsetzten vorderen Gehäusedeckel (7) sowie einen hinteren Gehäusedeckel (8) aufweist, die gemeinsam mit dem Gehäuserohr (4) einen das Antriebsteil (14) komplett aufnehmenden Aufnahmeraum (13) begrenzen, und dass die zentrale elektrische Schnittstelleneinrichtung (42) seitlich am Gehäuserohr (4) axial zwischen den beiden Gehäusedeckeln (7, 8) angeordnet ist, wobei sie über mindestens ein elektrisches Betätigungskabel (27) mit der Antriebsspulenanordnung (25) und über mindestens ein bezüglich diesem Betätigungskabel (27) gesondertes elektrisches Signalkabel (37) mit der Positionserfassungseinrichtung (36) verbunden ist, wobei diese elektrischen Kabel (27, 37) nach außen hin verdeckt in mindestens einem in der Wandung des Gehäuserohrs (4) ausgebildeten, sich in der Längsrichtung des Gehäuserohrs (4) erstreckenden und umfangsseitig geschlossenen Kabelkanal (47) verlaufen.

2. Linearantriebsvorrichtung nach Anspruch 1, **dadurch gekennzeichnet, dass** die Abtriebsstange (16) im vorderen Gehäusedeckel (7) unter gleichzeitiger Querabstützung linear verschiebbar geführt ist.

3. Linearantriebsvorrichtung nach Anspruch 1 oder 2, **dadurch gekennzeichnet, dass** das Antriebsteil (14) durch die beiden Gehäusedeckel (7, 8) in dem Aufnahmeraum (13) axial unbeweglich abgestützt ist.

4. Linearantriebsvorrichtung nach einem der Ansprüche 1 bis 3, **dadurch gekennzeichnet, dass** das Antriebsteil (14) innerhalb des Gehäuserohres (4) durch dessen Wandung (22) radial abgestützt und fixiert ist.

5. Linearantriebsvorrichtung nach einem der Ansprüche 1 bis 4, **dadurch gekennzeichnet, dass** das mindestens eine Betätigungskabel (27) und das mindestens eine Signalkabel (37) innerhalb des Gehäuserohres (4) ausgehend von der zentralen elektrischen Schnittstelleneinrichtung (42) ohne axiale Überlappung in einander entgegengesetzte Richtungen verlaufen.

6. Linearantriebsvorrichtung nach einem der Ansprüche 1 bis 5, **dadurch gekennzeichnet, dass** die elektrischen Betätigungskabel (27) und Signalkabel (37) auf ihrem Weg zu der Antriebsmagnetanordnung (28) und zu der Positionserfassungseinrichtung (36) im Anschluss an den mindestens einen Kabelkanal (47) in mindestens einem der Gehäusedeckel (7, 8) verlaufen.

7. Linearantriebsvorrichtung nach Anspruch 6, **dadurch gekennzeichnet, dass** der mindestens eine Kabelkanal (47) an mindestens einer Stirnseite (5, 6) des Gehäuserohrs (4) ausmündet und dort in eine der Kabelführung dienende Aussparung (48, 49) des sich anschließenden Gehäusedeckels (7, 8) übergeht.

8. Linearantriebsvorrichtung nach einem der Ansprüche 1 bis 7, **dadurch gekennzeichnet, dass** einerseits das mindestens eine mit der Antriebsspulenanordnung (25) verbundene elektrische Betätigungskabel (27) und andererseits das mindestens eine mit der Positionserfassungseinrichtung (36) verbundene elektrische Signalkabel (37) von entgegengesetzten Stirnseiten des Gehäuserohrs (4) her in dem mindestens einen Kabelkanal (47) zu der zentralen elektrischen Schnittstelleneinrichtung (42) verlaufen.

9. Linearantriebsvorrichtung nach Anspruch 8, **dadurch gekennzeichnet, dass** ein das Gehäuserohr (4) über seine gesamte Länge durchziehender Kabelkanal (47) vorhanden ist, mit dem die zentrale elektrische Schnittstelleneinrichtung (42) an einer zu beiden Gehäusedeckeln (7, 8) axial beabstandeten Montagestelle (53) des Gehäuserohrs (4) verbunden ist, wobei das Betätigungskabel (27) in dem ausgehend von der Montagestelle (53) zu dem einen Gehäusedeckel (7) führenden Kanalabschnitt (47a) und das Signalkabel (37) in dem ausgehend von der Montagestelle (53) zu dem anderen Gehäusedeckel (8) führenden Kanalabschnitt (47a) des Kabelkanals (47) verläuft.

10. Linearantriebsvorrichtung nach Anspruch 8 oder 9, **dadurch gekennzeichnet, dass** mindestens ein Signalkabel (37) ausgehen von der zentralen elektrischen Schnittstelleneinrichtung (42) zum vorderen Gehäusedeckel (7) verläuft, während mindestens ein Betätigungskabel (27) ausgehend von der zentralen elektrischen Schnittstelleneinrichtung (42) zum hinteren Gehäusedeckel (8) verläuft.

11. Linearantriebsvorrichtung nach Anspruch 10, **dadurch gekennzeichnet, dass** das zum vorderen Gehäusedeckel (7) verlaufende mindestens eine Signalkabel (37) zu einem Wegmesssystem (55) der Positionserfassungseinrichtung (36) führt.

12. Linearantriebsvorrichtung nach einem der Ansprüche 1 bis 11, **dadurch gekennzeichnet, dass** das mindestens eine Betätigungskabel (27) vom rückseitigen Endbereich (52) des Antriebsteils (14) abgeht und durch den hinteren Gehäusedeckel (8) hindurch in den zur zentralen elektrischen Schnittstelleneinrichtung (42) führenden mindestens einen Kabelkanal (47) des Gehäuserohrs (4) eintritt.

13. Linearantriebsvorrichtung nach einem der Ansprüche 1 bis 12, **dadurch gekennzeichnet, dass** mindestens ein Signalkabel (37) aus dem vorderen Gehäusedeckel (7) heraus in den zur zentralen elektrischen Schnittstelleneinrichtung (42) führenden mindestens einen Kabelkanal (47) des Gehäuserohrs (4) eintritt.

14. Linearantriebsvorrichtung nach Anspruch 13, **dadurch gekennzeichnet, dass** mindestens ein elektrisches Signalkabel (37) ausgehend von einem im vorderen Gehäusedeckel (7) angeordneten, berührungslos mit der Abtriebsstange (15) kooperierenden Sensorteil (54) der Positionserfassungseinrichtung (36) in den mindestens einen Kabelkanal (47) des Gehäuserohrs (4) eintritt.

15. Linearantriebsvorrichtung nach einem der Ansprüche 1 bis 14, **dadurch gekennzeichnet, dass** die Positionserfassungseinrichtung (36) einen rückseitig am Läufer (32) angeordneten und dessen axiale Bewegung mitmachenden Betätigungsmagneten (63) aufweist, der zur Detektion einer eingefahrenen Position der Bewegungseinheit (35) berührungslos mit einem am hinteren Gehäusedeckel (8) angeordneten Positionssensor (58) zusammenwirkt, von dem mindestens ein durch den hinteren Gehäusedeckel (8) und einen in der Wandung (22) des Gehäuserohrs (4) ausgebildeten Kabelkanal (47) hindurch zu der zentralen elektrischen Schnittstelleneinrichtung (42) führendes elektrisches Signalkabel (38) ausgeht.

16. Linearantriebsvorrichtung nach Anspruch 15, **dadurch gekennzeichnet, dass** die Positionserfassungseinrichtung (36) ein inkrementelles Wegmesssystem (55) enthält, wobei der Positionssensor (58) einen Referenzsensor für dieses Wegmesssystem (55) bildet.

17. Linearantriebsvorrichtung nach Anspruch 16, **dadurch gekennzeichnet, dass** mindestens ein an das Wegmesssystem (55) angeschlossenes elektrisches Signalkabel (37) ausgehend vom vorderen Gehäusedeckel (7) durch einen Kabelkanal (47) des Gehäuserohrs (4) hindurch zu der zentralen elektrischen Schnittstelleneinrichtung (42) geführt ist, während das mindestens eine an den Positionssensor (58) angeschlossene elektrische Signalkabel (38) und das mindestens eine elektrische Betätigungskabel (27) ausgehend vom hinteren Gehäusedeckel (8) durch einen Kabelkanal (47) des Gehäuserohrs (4) hindurch zu der zentralen elektrischen Schnittstelleneinrichtung (42) geführt sind.

18. Linearantriebsvorrichtung nach einem der Ansprüche 15 bis 17, **dadurch gekennzeichnet, dass** der Positionssensor (58) in einer Befestigungsnut (62) am Außenumfang des hinteren Gehäusedeckels (8) fixiert ist, zu der ein im hinteren Gehäusedeckel (8) verlaufender Kabeldurchführungskanal (66) für das zugeordnete elektrische Signalkabel (38) ausmündet.

19. Linearantriebsvorrichtung nach einem der Ansprüche 1 bis 18, **dadurch gekennzeichnet, dass** die zentrale elektrische Schnittstelleneinrichtung (42) so am Gehäuserohr (4) angeordnet ist, dass sie das Außengehäuse (2) stirnseitig nicht überragt.

20. Linearantriebsvorrichtung nach einem der Ansprüche 1 bis 19, **dadurch gekennzeichnet, dass** an der zentralen elektrischen Schnittstelleneinrichtung (42) zwei gesonderte Kabelabgangseinrichtungen (76) für zum einen mindestens ein mit dem mindestens einen Betätigungskabel (27) verbundenes elektrische Anschlusskabel (76) und zum anderen mindestens ein mit dem mindestens einen Signalkabel (37, 38) verbundenes weiteres elektrisches Anschlusskabel (76).

21. Linearantriebsvorrichtung nach einem der Ansprüche 1 bis 20, **dadurch gekennzeichnet, dass** am Außenumfang des Gehäuserohres (4) sich axial erstreckende Kühlrippen (46) ausgebildet sind.

22. Linearantriebsvorrichtung nach einem der Ansprüche 1 bis 21, **dadurch gekennzeichnet, dass** an mindestens einem Gehäusedeckel (7, 8) eine eine externe Befestigung ermöglichende mechanische Befestigungsschnittstelle (45) vorhanden ist.

23. Linearantriebsvorrichtung nach einem der Ansprüche 1 bis 22, **dadurch gekennzeichnet, dass** der hintere Gehäusedeckel (8) in axialer Verlängerung der Bewegungseinheit (35) eine durch einen Verschlussdeckel (85) lösbar verschlossene Zugangsöffnung (82) aufweist, durch die hindurch bei entferntem Verschlussdeckel (85) ein Entnehmen und Einsetzen der Bewegungseinheit (35) möglich ist.

## Claims

1. Electric linear drive device with an outer housing (2) comprising a housing tube (4) into which the drive part (14) of a drive unit (15) designed as an electrodynamic linear direct drive is axially installed in the manner of a cartridge in such a way that a drive rod (16) of the drive unit (15) projects at the front of the outer housing (2), wherein the drive part (14) comprises an outer drive housing (24) bearing against the inner circumferential surface of the tube interior (18) of the housing tube (4) and accommodating a stationary drive coil assembly (25) and an axially movable rotor (32) connected to the drive rod (16) and equipped with a drive magnet assembly (28), with a position detecting device (36) for detecting at least one axial position of the moving unit (35) comprising the rotor (32) and the drive rod (16), and with a central electric interface device (42) connected both to the drive coil assembly (25) and to the position detecting device (36) for external electric communication, **characterised in that** the outer housing (2) is provided at the end faces of the housing tube (4) with a front housing cover (7) through which the drive rod (16) passes and with a rear housing cover (8), the two housing covers together with the housing tube (4) bounding a location chamber (13) which completely accommodates the drive part (14), and **in that** the central electric interface device (42) is placed at the side of the housing tube (4) axially between the two housing covers (7, 8), being connected via at least one electric control cable (27) to the drive coil assembly (25) and via at least one electric signal cable (37) separate from the control cable (27) to the position detecting device (36), the said cables (27, 37) being concealed from the outside and running in at least one cable duct (47) formed in the wall of the housing tube (4), extending in the longitudinal direction of the housing tube (4) and being circumferentially enclosed.

2. Linear drive device according to claim 1, **characterised in that** the drive rod (16) is guided for linear displacement in the front housing cover (7) while being transversely supported.

3. Linear drive device according to claim 1 or 2, **characterised in that** the drive part (14) is supported in the location chamber (13) by the two housing covers (7, 8) in an axially immovable manner.

4. Linear drive device according to any of claims 1 to 3, **characterised in that** the drive part (14) is radially supported and located within the housing tube (4) by the wall (22) thereof.

5. Linear drive device according to any of claims 1 to 4, **characterised in that** the at least one control cable (27) and the at least one signal cable (37) run within the housing tube (4) from the central electric interface device (42) in opposite directions without any axial overlap.

6. Linear drive device according to any of claims 1 to 5, **characterised in that** the electric control cables (27) and signal cables (37) run, on their way to the drive magnet assembly (28) and to the position detecting device (36), in at least one of the housing covers (7, 8) following their passage through the at least one cable duct (47).

7. Linear drive device according to claim 6, **characterised in that** the at least one cable duct (47) terminates on at least one end face (5, 6) of the housing tube (4) and there merges into a recess (48, 49) of the adjoining housing cover (7, 8) which is designed for cable routing.

8. Linear drive device according to any of claims 1 to 7, **characterised in that** the at least one electric control cable (27) connected to the drive coil assembly (25) on the one hand and the at least one electric signal cable (37) connected to the position detecting device (36) on the other hand run from opposite end faces of the housing tube (4) in the at least one cable duct (47) to the central electric interface device (42).

9. Linear drive device according to claim 8, **characterised in that** a cable duct (47) passing through the entire length of the housing tube (4) is provided, to which the central electric interface device (42) is connected at a mounting point (53) of the housing tube (4) which is located at an axial distance from the two housing covers (7, 8), the control cable (27) running in the duct section (47a) extending from the mounting point (53) to one housing cover (7), while the signal cable (37) runs in the duct section (47a) of the cable duct (47) which extends from the mounting point (53) to the other housing cover (8).

10. Linear drive device according to claim 8 or 9, **characterised in that** at least one signal cable (37) runs from the central electric interface device (42) to the front housing cover (7), while at least one control cable (27) runs from the central electric interface device (42) to the rear housing cover (8).

11. Linear drive device according to claim 10, **characterised in that** the at least one signal cable (37) running to the front housing cover (7) leads to a position sensing system (55) of the position detecting device (36).

12. Linear drive device according to any of claims 1 to 11, **characterised in that** the at least one control cable (27) runs from the rear end region (52) of the drive part (14) through the rear housing cover (8) to enter the at least one cable duct (47) of the housing tube (4) which leads to the central electric interface device (42).

13. Linear drive device according to any of claims 1 to 12, **characterised in that** at least one signal cable (37) runs from the front housing cover (7) into the at least one cable duct (47) of the housing tube (4) which leads to the central electric interface device (42).

14. Linear drive device according to claim 13, **characterised in that** at least one electric signal cable (37) runs from a sensor part (54) of the position detecting device (36), which is located in the front housing cover (7) and is in non-contact co-operation with the drive rod (15), to enter the at least one cable duct (47).

15. Linear drive device according to any of claims 1 to 14, **characterised in that** the position detecting device (36) comprises an actuating solenoid (63) located on the rear of the rotor (32) and following the axial movement thereof, which, in order to detect a retracted position of the moving unit (35), is in noncontact co-operation with a position sensor (58) on the rear housing cover (8), wherefrom at least one electric signal cable (38) leads through the rear housing cover (8) and through a cable duct (47) formed in the wall (22) of the housing tube (4) to the central electric interface device (42).

16. Linear drive device according to claim 15, **characterised in that** the position detecting device (36) includes an incremental position sensing system (55), the position sensor (58) acting as a reference sensor for the position sensing system (55).

17. Linear drive device according to claim 16, **characterised in that** at least one electric signal cable (37) connected to the position sensing system (55) is routed from the front housing cover (7) through a cable duct (47) of the housing tube (4) to the central electric interface device (42), while the at least one electric signal cable (38) connected to the position sensor (58) and the at least one electric control cable (27) are routed from the rear housing cover (8) through a cable duct (47) of the housing tube (4) to the central electric interface device (42).

18. Linear drive device according to any of claims 15 to 17, **characterised in that** the position sensor (58) is located in a mounting groove (62) on the outer circumference of the rear housing cover (8), where a cable entry duct (66) for the associated electric signal cable (38), which runs in the rear housing cover (8), terminates.

19. Linear drive device according to any of claims 1 to 18, **characterised in that** the central electric interface device (42) is so disposed on the housing tube (4) that it does not project beyond the end face of the outer housing (2).

20. Linear drive device according to any of claims 1 to 19, **characterised in that** two separate cable exit devices (76) are provided on the central electric interface device (42) for at least one electric connecting cable (76) connected to the at least one control cable (27) on the one hand and for at least one further electric connecting cable (76) connected to the at least one signal cable (37, 38) on the other hand.

21. Linear drive device according to any of claims 1 to 20, **characterised in that** axial cooling fins (46) are provided on the outer circumference of the housing tube (4).

22. Linear drive device according to any of claims 1 to 21, **characterised in that** a mechanical mounting interface (45) for external mounting is provided on at least one housing cover (7, 8).

23. Linear drive device according to any of claims 1 to 22, **characterised in that** the rear housing cover (8) comprises in axial extension of the moving unit (35) an access opening (83) releasably sealed by a cap (85), through which the moving unit (35) can be removed and installed if the cap (85) is removed.

## Revendications

1. Dispositif d'entraînement linéaire électrique, comportant un carter extérieur (2), qui comporte un tube formant carter (4) et dans lequel l'élément d'entraînement (14) d'une unité d'entraînement (15), réalisée sous la forme d'un entraînement linéaire direct électrodynamique, est inséré axialement à la manière d'une cartouche, de telle sorte qu'une tige de sortie (16) de l'unité d'entraînement (15) s'avance hors du carter extérieur (2) sur la face avant de celui-ci, l'élément d'entraînement (14) comportant un carter extérieur (24), qui est en appui sur la face périphérique intérieure du volume intérieur (18) du tube formant carter (4), et qui reçoit un système à bobine d'entraînement (25) localement fixe et un induit (32) mobile axialement, relié à la tige de sortie (16) et muni d'un système à aimant de commande (28), comportant un dispositif de détection de position (36) destiné à détecter au moins une position axiale de l'unité de déplacement (35) formée par l'induit (32) et la tige de sortie (16), et comportant un dispositif d'interface (42) électrique central pour la communication électrique externe, lequel est relié tant au système à bobine d'entraînement (25) qu'au dispositif de détection de position (36), **caractérisé en ce que** le carter extérieur (2) comporte un couvercle avant (7), disposé du côté frontal sur le tube formant carter (4) et traversé par la tige de sortie (16), ainsi qu'un couvercle arrière (8), lesquels délimitent, conjointement avec le tube formant carter (4), un compartiment (13) recevant complètement l'élément d'entraînement (14), et **en ce que** le dispositif d'interface (42) électrique central est disposé latéralement contre le tube formant carter (4), axialement entre les deux couvercles (7, 8), ledit dispositif d'interface étant relié au système à bobine d'entraînement (25) par au moins un câble d'actionnement (27) électrique et au dispositif de détection de position (36) par au moins un câble de transmission de signaux (37) électrique séparé dudit câble d'actionnement (27), lesdits câbles électriques (27, 37) s'étendant de manière masquée vers l'extérieur dans au moins un conduit de câble (47) fermé sur le pourtour, réalisé dans la paroi du tube formant carter (4) et orienté dans le sens longitudinal du tube formant carter (4).

2. Dispositif d'entraînement linéaire selon la revendication 1, **caractérisé en ce que** la tige de sortie (16) est guidée de manière mobile linéairement dans le couvercle avant (7) moyennant un appui transversal simultané.

3. Dispositif d'entraînement linéaire selon la revendication 1 ou 2, **caractérisé en ce que** l'élément d'entraînement (14) est supporté par les deux couvercles (7, 8) de manière immobile dans le sens axial dans le compartiment (13).

4. Dispositif d'entraînement linéaire selon l'une quelconque des revendications 1 à 3, **caractérisé en ce que** l'élément d'entraînement (14) est supporté et immobilisé radialement à l'intérieur du tube formant carter (4) par la paroi (22) de celui-ci.

5. Dispositif d'entraînement linéaire selon l'une quelconque des revendications 1 à 4, **caractérisé en ce que** ledit au moins un câble d'actionnement (27) et ledit au moins un câble de transmission de signaux (37) s'étendent à l'intérieur du tube formant carter (4), à partir du dispositif d'interface (42) électrique central, sans chevauchement axial, dans des directions opposées l'une à l'autre.

6. Dispositif d'entraînement linéaire selon l'une quelconque des revendications 1 à 5, **caractérisé en ce que** les câbles d'actionnement (27) et les câbles de transmission de signaux (37) électriques, sur leur trajet vers le système à aimant de commande (28) et vers le dispositif de détection de position (36), s'étendent à la suite dudit au moins un conduit de câble (47) dans au moins un des couvercles (7, 8).

7. Dispositif d'entraînement linéaire selon la revendication 6, **caractérisé en ce que** ledit au moins un conduit de câble (47) débouche au niveau d'au moins une face frontale (5, 6) du tube formant carter (4) et, à cet emplacement, se prolonge par un évidement (48, 49), destiné au guidage du câble et ménagé dans le couvercle (7, 8) consécutif.

8. Dispositif d'entraînement linéaire selon l'une quelconque des revendications 1 à 7, **caractérisé en ce que**, d'une part, ledit au moins un câble d'actionnement (27) électrique, relié au système à bobine d'entraînement (25), et, d'autre part, ledit au moins un câble de transmission de signaux (37), relié au dispositif de détection de position (36), s'étendent à partir de faces frontales opposées du tube formant carter (4) dans ledit au moins un conduit de câble (47) vers le dispositif d'interface (42) électrique central.

9. Dispositif d'entraînement linéaire selon la revendication 8, **caractérisé en ce qu'**il existe un conduit de câble (47), traversant le tube formant carter (4) sur toute sa longueur, par lequel le dispositif d'interface (42) électrique central est relié à un point de montage (53), à distance axiale des deux couvercles (7, 8), du tube formant carter (4), le câble d'actionnement (27) s'étendant dans le tronçon (47a) du conduit de câble (47) menant vers un couvercle (7), et le câble de transmission de signaux (37) s'étendant dans le tronçon (47a) dudit conduit de câble à partir du point de montage (53) vers l'autre couvercle (8).

10. Dispositif d'entraînement linéaire selon la revendication 8 ou 9, **caractérisé en ce qu'**au moins un câble de transmission de signaux (37) s'étend depuis le dispositif d'interface (42) électrique central vers le couvercle avant (7), tandis qu'au moins un câble d'actionnement (27) s'étend depuis le dispositif d'interface (42) électrique central vers le couvercle arrière (8).

11. Dispositif d'entraînement linéaire selon la revendication 10, **caractérisé en ce que** ledit au moins un câble de transmission de signaux (37) menant vers le couvercle avant (7) est guidé vers un système de mesure de déplacement (55) du dispositif de détection de position (36).

12. Dispositif d'entraînement linéaire selon l'une quelconque des revendications 1 à 11, **caractérisé en ce que** ledit au moins un câble d'actionnement (27) part de la zone d'extrémité (52) arrière de l'élément d'entraînement (14) et, en traversant le couvercle arrière (8), entre dans ledit au moins un conduit de câble (47) du tube formant carter (4), menant vers le dispositif d'interface (42) électrique central.

13. Dispositif d'entraînement linéaire selon l'une quelconque des revendications 1 à 12, **caractérisé en ce qu'**au moins un câble de transmission de signaux (37) sortant du couvercle avant (7) entre dans ledit au moins un conduit de câble (47) du tube formant carter (4), menant vers le dispositif d'interface (42) électrique central.

14. Dispositif d'entraînement linéaire selon la revendication 13, **caractérisé en ce qu'**au moins un câble de transmission de signaux (37) électrique, qui part d'un élément capteur (54) du dispositif de détection de position (36), situé dans le couvercle avant (7) et coopérant sans contact avec la tige de sortie (16), entre dans ledit au moins un conduit de câble (47) du tube formant carter (4).

15. Dispositif d'entraînement linéaire selon l'une quelconque des revendications 1 à 14, **caractérisé en ce que** le dispositif de détection de position (36) comporte un aimant de commande (63), qui est disposé sur la face arrière de l'induit (32) et effectue, conjointement avec celui-ci, un mouvement axial et qui, pour détecter une position entrée de l'unité de déplacement (35), coopère sans contact avec un capteur de position (58), qui est disposé sur le couvercle arrière (8) et duquel part au moins un câble de transmission de signaux (38) électrique, guidé vers le dispositif d'interface (42) électrique central en passant par le couvercle arrière (8) et par le conduit de câble (47), réalisé dans la paroi (22) du tube formant carter (4).

16. Dispositif d'entraînement linéaire selon la revendication 15, **caractérisé en ce que** le dispositif de détection de position (36) contient un système de mesure de déplacement (55) incrémental, le capteur de position (58) formant un capteur de référence pour ledit système de mesure de déplacement (55).

17. Dispositif d'entraînement linéaire selon la revendication 16, **caractérisé en ce qu'**au moins un câble de transmission de signaux (37) électrique, raccordé au système de mesure de déplacement (55), est guidé à partir du couvercle avant (7) vers le dispositif d'interface (42) électrique central en passant par un conduit de câble (47) du tube formant carter (4), tandis que ledit au moins un câble de transmission de signaux (38) électrique, raccordé au capteur de position (58), et ledit au moins un câble d'actionnement (27) électrique sont guidés à partir du couvercle arrière (8) vers le dispositif d'interface (42) électrique central en passant par un conduit de câble (47) du tube formant carter (4).

18. Dispositif d'entraînement linéaire selon l'une quelconque des revendications 15 à 17, **caractérisé en ce que** le capteur de position (58) est fixé dans une rainure de fixation (62) sur le pourtour extérieur du couvercle arrière (8), vers laquelle débouche un conduit de passage de câble (66), disposé dans le couvercle arrière (8) et destiné au câble de transmission de signaux (38) électrique.

19. Dispositif d'entraînement linéaire selon l'une quelconque des revendications 1 à 18, **caractérisé en ce que** le dispositif d'interface (42) électrique central est disposé sur le tube formant carter (4), de telle sorte qu'il ne s'avance pas au-delà de la face frontale du carter extérieur (2).

20. selon l'une quelconque des revendications 1 à 19, **caractérisé en ce que** sur le dispositif d'interface (42) électrique central sont disposés deux dispositifs de sortie de câble (76) séparés pour, d'une part, au moins un câble de raccordement (76) électrique, relié audit au moins un câble d'actionnement (27), et, d'autre part, au moins un autre câble de raccordement (76) électrique, relié audit au moins un câble de transmission de signaux (37, 38).

21. Dispositif d'entraînement linéaire selon l'une quelconque des revendications 1 à 20, **caractérisé en ce que** deux nervures de refroidissement (46) s'étendant dans le sens axial, sont réalisées sur le pourtour extérieur du tube formant carter (4).

22. Dispositif d'entraînement linéaire selon l'une quelconque des revendications 1 à 21, **caractérisé en ce que** sur au moins un couvercle (7, 8) est disposée une interface de fixation (45) mécanique permettant une fixation externe.

23. Dispositif d'entraînement linéaire selon l'une quelconque des revendications 1 à 22, **caractérisé en ce que** le couvercle arrière (8) comporte, dans le prolongement axial de l'unité de déplacement (35), une ouverture d'accès (82), obturée de manière amovible par un couvercle de fermeture (85), à travers laquelle l'unité de déplacement (35) peut être enlevée et introduite lorsque le couvercle de fermeture (85) est retiré.
